# EUROPEAN PATENT APPLICATION

(11) **EP 2 573 999 A1**
(43) Date of publication of application: **27.03.2013**
(21) Application number: 12185107.5
(22) Date of filing: 19.09.2012
(51) Int. Cl.: H04L 29/06

(54) **A transmission method for supporting data compression**

(30) Priority: 21.09.2011 CN 201110282167
(71) Applicant: Hangzhou H3C Technologies Co., Ltd., Hangzhou, Zhejiang 310053 (CN)
(72) Inventor: Xu, Guoxiang, 100085 Haidian District, (CN)
(74) Representative: Rees, Simon John Lewis

(57) **Abstract**

The present disclosure describes a transmission method for supporting data compression in a wireless communication network. The wireless communication network includes a network device and a terminal device. In the method, the network device sends a first message indicating at least one data compression algorithm supported by the network device, and receives a second message identifying a data compression algorithm supported by the terminal device, the second message being sent by the terminal device based on the first message, wherein the data compression algorithm indicated in the second message is selected from the at least one data compression algorithm indicated in the first message. The network device then sends a third message to the terminal device upon receiving the second message, the third message identifying a negotiated data compression algorithm amongst the at least one data compression algorithm that corresponds to the data compression algorithm identified in the second message, and the network device may then receives a subsequent message from the terminal device containing a payload compressed using the negotiated data compression algorithm identified in the third message and indicating that data compression is performed.

## Description

BACKGROUND

A wireless communication network such as a WLAN provides access services based on access methods such as CDMA/CA (Code Division Multiple Access/Channel Access), in which a plurality of wireless terminals share a common access medium, for instance an air interface. The bandwidth available to each terminal is therefore limited. In order to increase the traffic over a link that has a limited bandwidth, data compression techniques may be used.

DESCRIPTION OF THE DRAWINGS

For a more complete understanding of the present disclosure, specific examples will now be explained with reference to the accompanying drawings, in which:

Figure 1A is a flow diagram of a transmission method according to an example;

Figure 1B is a diagram depicting a process of establishing an association between an AP and STA1 according to an example;

Figure 1C is a diagram depicting a process of establishing an association between STA1 and STA2 according to an example;

Figure 2 is a schematic diagram of a TLV format used in the method of Figure 1A;

Figure 3A is a schematic diagram of an STA for implementing the method of Figure 1A according to an example;

Figure 3B is a schematic diagram of an STA for implementing the method of Figure 1A according to another example; and

Figure 4 is a schematic diagram of an AP for implementing the method of Figure 1A according to an example.

DETAIL DESCRIPTION

A WLAN may include a network device such as an access point (AP) and a terminal device such as a station (STA). An AP may be a router or a switch. An STA may be a computer, a workstation, a smart phone, etc. In the examples below only one AP and two STAs - STA1, STA2 - are described. However, it should be understood that a WLAN may include a plurality of APs and a plurality of STAs.

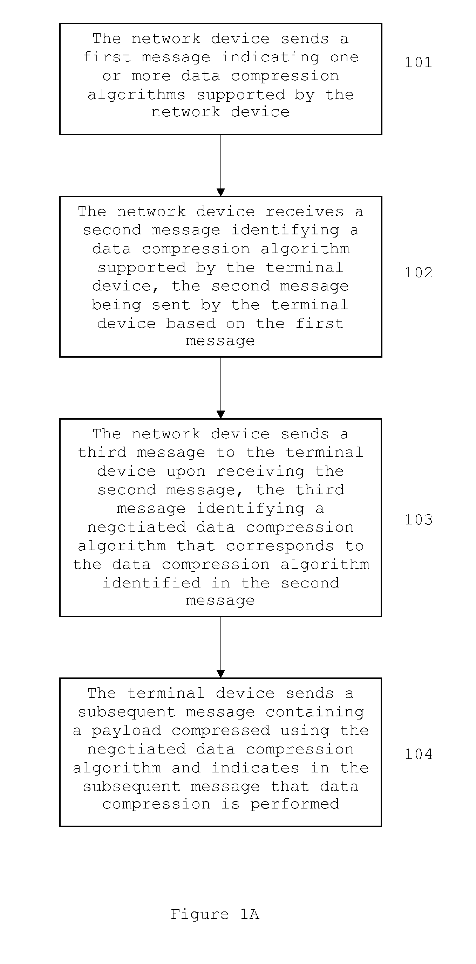

**Figure 1A** is a flow diagram depicting an example of a transmission method for supporting data compression in a WLAN comprising an access point AP and two stations STA1 and STA2.

At block 101, the AP sends a first message indicating one or more data compression algorithms that are supported by the AP. The first message may include an indicator indicating if data compression is supported by the AP and a separate identifier identifying each of the data compression algorithms which it supports. The first message may be broadcast by the AP to all STAs in the WLAN in a beacon frame, and each STA receives the beacon message from the AP before establishing association with the AP. Alternatively, an STA may send a probe request to the AP, and the first message is sent in response to receiving the probe request received from the STA.

At block 102, the AP receives a second message identifying a data compression algorithm supported by an STA. The STA sends the second message based on the first message received from the AP. In particular, the STA determines if it supports any of the one or more data compression algorithms indicated in the first message, and if more than one of the data compression algorithms indicated in the first message are supported, one of the supported data compression algorithm is selected and identified in the second message. The second message may be an association message or a re-associated message sent by the STA to establish association with the AP.

At block 103, the AP sends a third message to the STA upon receiving the second message. The third message may be a response message in response to the association or re-association message received from the STA. In particular, the AP confirms that the data compression algorithm identified in the second message is one of the one or more data compression algorithms supported by itself, and identify in the third message a data compression algorithm that corresponds to the one identified in the second message as a negotiated data compression algorithm to be used for compressing the payload of a future message transmission between the AP and the STA. When the STA receives the third message, it determines that an association has been established with the AP. The negotiated data compression algorithm is generally the same data compression algorithm that is identified in the second message, but may also be a data compression algorithm that is compatible but not necessarily the same data compression algorithm identified in the second message.

When the STA needs to send a data message or a management message to the AP, at block 104, the STA compresses the payload of the message to be sent, indicates in the message that data compression has been performed on the payload, and sends the compressed message to the AP.

In a WLAN with a plurality of APs and STAs, an STA may collect the first message from each AP and select one of the plurality of APs to establish association. The STA then identifies in an association or re-association message a data compression algorithm which it supports, selected from the one or more data compression algorithms indicated in the first message from the selected AP. If the selected AP does not support data compression, or the STA supports none of the data compression algorithms supported by the selected AP, the STA does not identify any data compression algorithm in the association or re-association message.

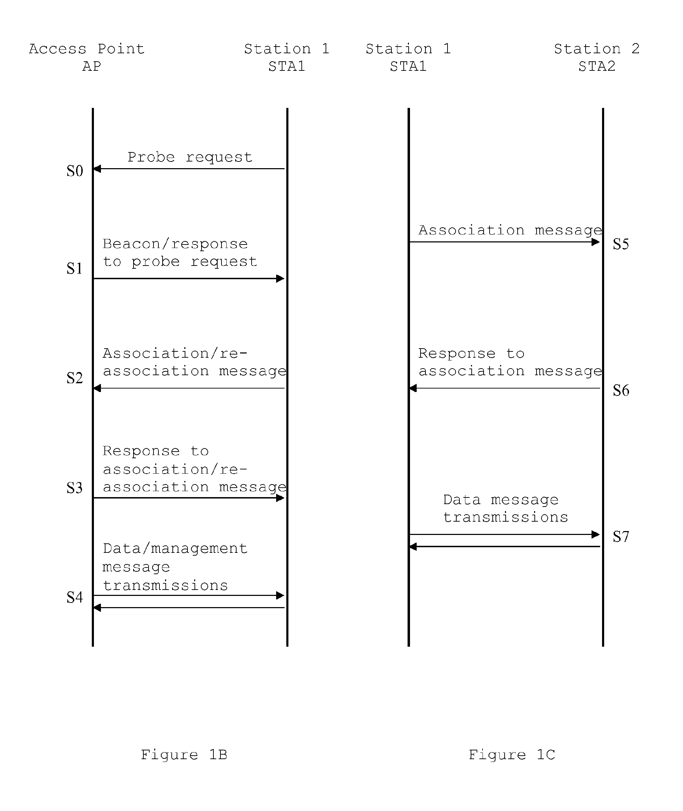

For example, referring to **Figure 1B****,** STA1 may send a probe request at S0, and receive a response to the probe request from AP at S1. Alternatively, STA1 may receive a beacon message from AP at S1. Both the response to the probe request and the beacon message sent by AP indicate one or more data compression algorithms supported by AP. The response or the beacon message may include an indicator indicating that AP supports data compression and a separate identifier identifying each of the one or more data compression algorithms. If STA1 selects AP to establish association, an association or re-association message is sent which identifies a data compression algorithm supported by STA1 selected from the one or more data compression algorithms indicated in the response to the probe request or the beacon message.

When AP receives the association or re-association message from STA1, the received message is analyzed so as to determine if STA1 supports data compression and if so, whether the data compression algorithm indicated in the received message is supported by AP. At S3, AP sends a response to the association or re-association message to confirm the association. If it has been determined that the association or re-association message received from STA1 identifies a data compression algorithm supported by AP, AP identifies the data compression algorithm in the response to the association or re-association message. When STA1 receives a response to the association or re-association message from AP identifying the data compression algorithm, it determines that a common data compression algorithm has been successfully negotiated.

Once association is established, at S4, AP may send any unicast data or management message to STA1 by compressing the payload of the message using the successfully negotiated data compression algorithm, and STA1 may similarly send any unicast data or management message to AP by compressing the payload of the message using the successfully negotiated data compression algorithm. In an example, the compressed message includes an identifier indicating that data compression has been performed. If no data compression algorithm has been successfully negotiated, messages between AP and STA1 are sent without performing any data compression.

In a case where AP has established association with a plurality of STAs, when AP needs to send a broadcast or multicast message to the plurality of associated STAs, it determines if all of the associated STAs support the same data compression algorithm. If so, AP compresses the payload of the broadcast or multicast message and indicates in the message that data compression has been performed, and sends the message to the plurality of STAs. If one or more of the plurality of associated STAs do not support data compression, or support different data compression algorithms, the message is sent without data compression.

An example of a process for establishing a link in an ad-hoc network is described below with reference to **Figure 1C****.**

In the present example, STA1 attempts to establish association with STA2. Here it is assumed that STA1 supports data compression. In this case, at S5, when STA1 sends an association message to STA2, STA1 indicates in the association message that it supports data compression and identifies the one or more data compression algorithms that it supports.

When STA2 receives the association message from STA1, it first determines that data compression is supported by itself, then determines if any of the one or more data compression algorithms identified in the association message is supported. STA2 then selects a data compression algorithm amongst the one or more data compression algorithm which it supports, and sends, at S6, a response message to STA1 indicating that it supports data compression and identifies the selected data compression algorithm.

If STA2 does not support data compression or it supports none of the one or more data compression algorithms identified in the association message, at S6, STA2 sends a response message to STA2 without identifying a data compression algorithm.

When STA1 receives the response message from STA2, it determines that data compression has been successfully negotiated when the response message indicates that STA2 supports data compression and the message identifies a negotiated data compression algorithm. At S7, STA1 records the successfully negotiated data compression algorithm, and compresses the payload of any subsequent messages to be sent to STA2 using the negotiated data compression algorithm. Similarly, STA2 records the successfully negotiated data compression algorithm, and compresses the payload of any subsequent messages directed to STA1 using the negotiated data compression algorithm.

In the present example, when an ad-hoc network is established amongst a plurality of STAs, irrespective of whether any data compression algorithm has been negotiated, when a message is multicast or broadcast from one STA to multiple STAs, the message is sent without performing data compression. However, in another example, it may be desirable to determine if the multiple STAs support the same data compression algorithm and to compress the multicast/broadcast message using the common data compression algorithm.

In the examples described above, the selection of a data compression algorithm from amongst a plurality of data compression algorithms may be realized using random selection or a predetermined selection rule, depending on specific design requirements.

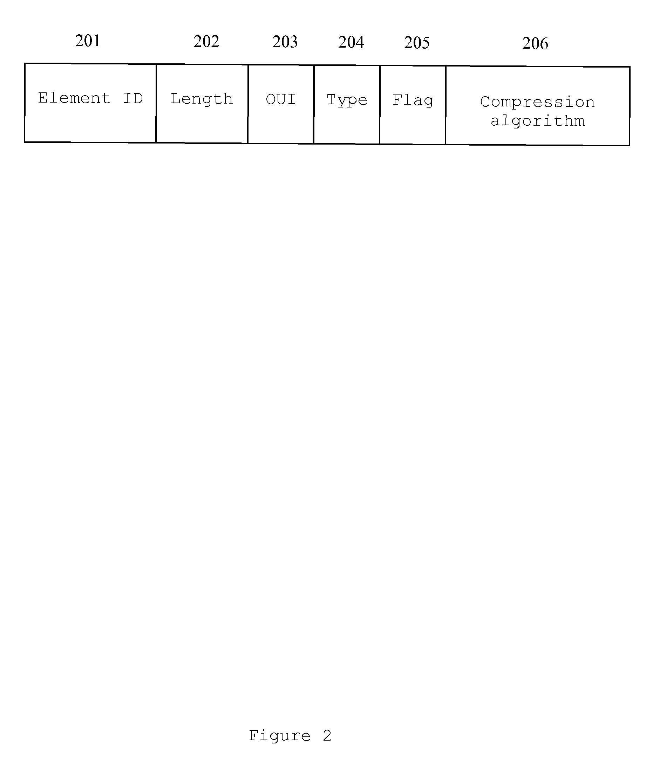

In the examples, to indicate support for data compression and to identify one or more supported data compression algorithm in a beacon message or a response message to a probe request sent by an AP, in an association or re-association message sent by an STA, or in a response message to an association or re-association message sent by either an AP or an STA, may all be realized using the same format of message encapsulation by implementing a common TLV (type, length and value), as shown in **Figure 2****.**

In Figure 2, fields 201 and 202 indicate the "Element ID" and "Length" of the message, and conform to the format and meaning of IE in IEEE 802.11. Field 203 is "OUI" (organization unique identifier), i.e. the manufacturer identifier of an AP. Field 204 is "Type", which is a type value assigned to the present switching algorithm under the specified OUI. Field 205 is "Flag", in which one bit indicates whether data compression is supported. Field 206 is "Compression algorithm", in which each bit signifies a corresponding data compression algorithm. When a data compression algorithm is supported, the bit corresponding to the supported data compression algorithm is set to 1. However, in another example, whether data compression is supported may be recognized by checking the content of field 206, in which case field 205 becomes unnecessary and may be omitted.

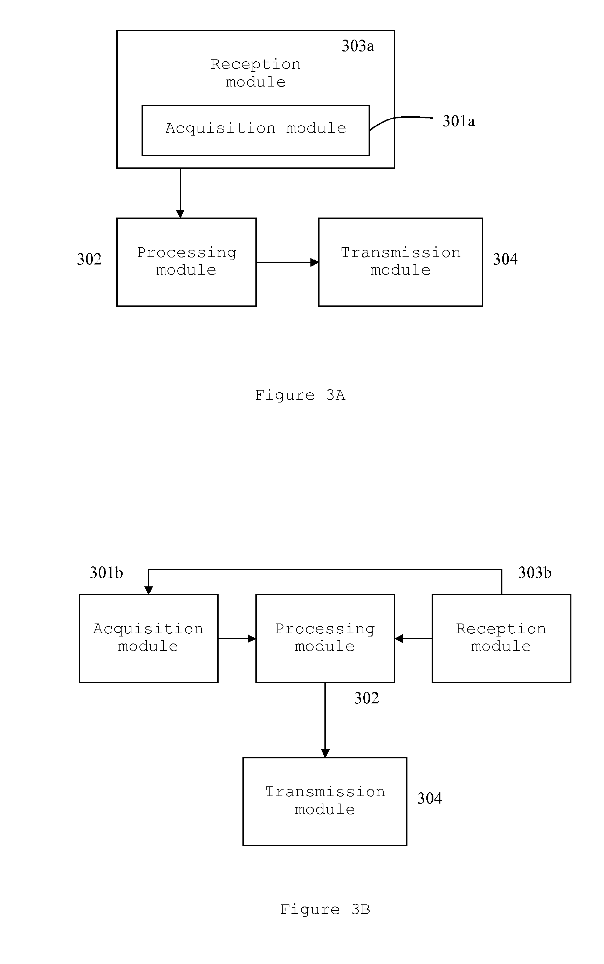

Two examples of an STA capable of implementing the methods described above are shown schematically in **Figure 3A** and **Figure 3****B.** A WLAN to which the STA belongs may include one or more APs and other STAs.

An STA according to the example of Figure 3A comprises a processing module 301, a reception module 303a and a transmission module 304. The reception module 303a may be further provided with a separate acquisition module 301a, but the function of the acquisition module 301a may also be integrated into the reception module 303a.

The acquisition module 301a is configured to acquire one or more data compression algorithms identified in a message received from an AP or another STA.

The processing module 302 is configured to determine amongst the one or more data compression algorithms acquired by the acquisition module 301a a data compression algorithm supported by itself, to identify the determined data compression algorithm in a association/re-association message or in a response message to an association message to be sent to an AP or another STA, to confirm that a negotiated data compression algorithm identified in a received response message corresponds to the determined data compression algorithm, and to compress a payload of a subsequent message using the negotiated data compression algorithm and indicate in the subsequent message that data compression is performed.

The reception module 303a is configured to receive a message from an AP or another STA indicating one or more supported data compression algorithms, including a beacon message or a response to a probe request form the AP, and an association message or a response message to an association message from the another STA. The reception module 303a then passes the message on to the acquisition module 301a.

The transmission module 304 is configured to send an association or re-association message, a response message, and all subsequent messages processed by the processing module 304.

In an example, the transmission module 304 may be configured to send a probe request to an AP to request a message indicating the one or more data compression algorithms supported by the AP. The reception module 303a then receives a response to the probe request from the AP and passes the message to the acquisition module 301a.

In an example, the processing module 302 may be configured to confirm that a message received by the reception module 303a indicates a plurality of data compression algorithms, confirm that one or more of the indicated data compression algorithms are supported by itself, and in the case where multiple data compression algorithms are supported, select one data compression algorithm, identify the selected data compression algorithm in a response message, and cause the transmission module 304 to send the message.

Figure 3B is a schematic diagram of an alternative example of an STA, in which the acquisition module 301b is provided to the STA separately from the reception module 303b. The acquisition module 301b functions in the same way as the acquisition module 301a, and the reception module 303b functions in the same way as the reception module 303a. The processing module 302 and the transmission module 304 in the STA of Figure 3B are the same as that in the STA of Figure 3A.

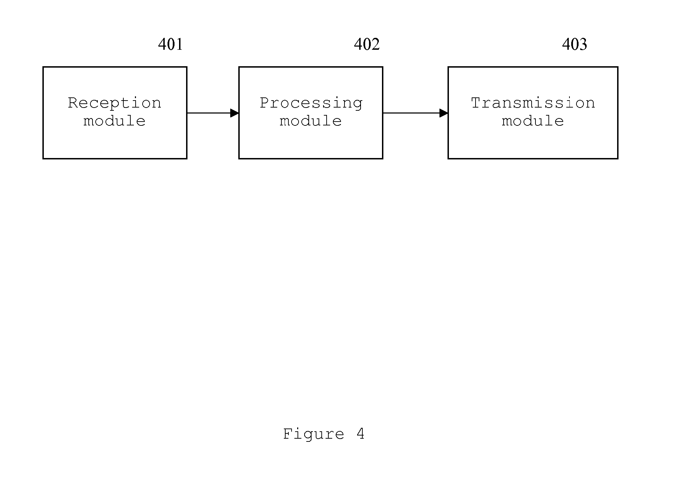

An example of an AP capable of implementing the methods described above is shown schematically in **Figure 4****.** Again, a WLAN to which the AP belongs may include other APs and one or more STAs.

An AP according to the example of Figure 4 comprises a reception module 401, a processing module 402 and a transmission module 403.

The reception module 401 is configured to receive an association or re-association message identifying a data compression algorithm supported by an STA that belongs to the same wireless communication network.

The processing module 402 is configured to determine that the data compression algorithm identified in the association or re-association message received by the reception module 401 is a data compression algorithm supported by the AP, and to determine, from amongst the one or more data compression algorithms that it supports, a negotiated data compression algorithm that corresponds to the data compression algorithm identified in the received association or re-association message.

The transmission module 403 is configured to send a message indicating the one or more data compression algorithms that are supported by the AP, and to send a response message in response to the received association or re-association message identifying the negotiated data compression algorithm determined by the processing module 402.

The transmission module 403 may send the message indicating the one or more data compression algorithms supported by the AP in a beacon message, or in response to the reception module receiving a probe request from the STA.

In operation, once a data compression algorithm is negotiated between the AP and the STA, the processing module 402 may compress a payload of a subsequent message to the STA using the negotiated data compression algorithm identified in the response message, and indicate in the subsequent message that data compression is performed. The transmission module may then send the compressed message to the STA.

In a case where the wireless communication network includes a plurality of STAs, the reception module 401 is configured to receive an association or re-association message from each of the plurality of STAs. For each of the received association or re-association messages that identifies a data compression algorithm supported by the respective STA, the processing module 402 determines if the data compression algorithm identified in the received association or re-association message is a data compression algorithm supported by the network device. For each STA which identified a data compression algorithm supported by the AP, the processing module 402 determines, amongst the one or more data compression algorithms supported by the AP, a negotiated data compression algorithm that corresponds to the data compression algorithm identified in the respective received association or re-association message. The negotiated data compression algorithm may be the same algorithm identified in the received association or re-association message, or an algorithm compatible with the algorithm identified in the received association or re-association message. The transmission module 403 then sends a response message to each of the plurality of destination STAs identifying the respective negotiated data compression algorithm. When the AP is required to send a multicast message or broadcast message to the plurality of STAs, the processing module 402 is configured to determine whether all of the plurality of the destination STAs support the same data compression algorithm based on the association or re-association message received from each of the plurality of STAs. If so, the processing module 402 compresses the payload of the multicast or broadcast message using the common data compression algorithm and indicates in the message that data compression is performed. The transmission module 403 then sends the multicast or broadcast message to the plurality of destination STAs.

In summary, by implementing the method using an AP and one or more STAs according to the examples described above, it is possible to negotiate a compatible data compression algorithm between the AP and an STA, or between two STAs, while establishing an association over a wireless communication network. In this way, it is possible to effectively utilize the available bandwidth provided by the wireless communication network.

Although the flow diagrams described above show a specific order of execution, the order of execution may differ from that which is depicted.

The above examples can be implemented by hardware, software, firmware, or a combination thereof. For example, the various methods and functional modules described herein may be implemented by a processor (the term processor is to be interpreted broadly to include a CPU, processing unit, ASIC, logic unit, or programmable gate array etc.). The methods and functional modules may all be performed by a single processor or divided amongst several processers. The methods and functional modules may be implemented as machine readable instructions executable by one or more processors, hardware logic circuitry of the one or more processors, or a combination thereof. Further, the teachings herein may be implemented in the form of a software product, the computer software product being stored in a storage medium and comprising a plurality of instructions for making a computer device (e.g. a personal computer, a server or a network device such as a router, switch, access point etc.) implement the method recited in the examples of the present disclosure.

It should be understood that embodiments of the method for supporting data compression in a wireless communication network, and embodiments of the network device and terminal device given above are implementation examples only, and do not limit the scope of the invention. Numerous other changes, substitutions, variations, alternations and modifications may be ascertained by those skilled in the art, and it is intended that the present disclosure encompass all such changes, substitutions, variations, alterations and modifications as falling within the spirit and scope of the appended claims.

## Claims

1. A transmission method for supporting data compression in a wireless communication network, the wireless communication network including a network device and a terminal device, the method comprising:
the network device:
sending a first message indicating at least one data compression algorithm supported by the network device;
receiving a second message indicating that data compression is supported and identifying a data compression algorithm supported by the terminal device, the second message being sent by the terminal device based on the first message, wherein the data compression algorithm identified in the second message is selected from the at least one data compression algorithm indicated in the first message;
sending a third message to the terminal device upon receiving the second message, the third message indicating that data compression is supported and identifying a negotiated data compression algorithm amongst the at least one data compression algorithm that corresponds to the data compression algorithm identified in the second message; and
receiving, from the terminal device, a subsequent message containing a payload compressed using the negotiated data compression algorithm identified in the third message and indicating that data compression is performed.

2. The method of claim 1 further comprising sending, by the network device, a subsequent message containing a payload compressed using the negotiated data compression algorithm identified in the third message and indicating in the subsequent message that data compression is performed.

3. The method of claim 1 wherein, in a case where the wireless communication network includes a plurality of terminal devices,
the network device receives a second message identifying a data compression algorithm supported by each of the plurality of terminal devices sent by the respective one of the plurality of terminal devices based on the first message, and sends a third message to each of the plurality of terminal devices identifying a negotiated data compression algorithm amongst the at least one data compression algorithm that corresponds to the data compression algorithm identified in the respective second message,
the method further comprises the network device determining if the terminal devices of the said plurality support the same data compression algorithm based on the received second message from each of the plurality of terminal devices, and, if so, multicasting or broadcasting to the plurality of terminal devices a subsequent message containing a payload compressed using the negotiated data compression algorithm identified in each third message and indicating in the subsequent message that data compression is performed.

4. The method of claim 1 wherein the network device sends the first message in response to receiving a request from the terminal device.

5. A transmission method for supporting data compression in a wireless communication network, the wireless communication network including a first terminal device and a second terminal device, the method comprising:
the first terminal device:
sending, to the second terminal device, an association message indicating at least one data compression algorithm supported by the first terminal device;
receiving, from the second terminal device, a response message indicating data compression is supported and identifying a negotiated data compression algorithm supported by the second terminal device, the response message being sent by the second terminal device in response to the association message; and
sending, to the second terminal device, a subsequent message containing a payload compressed using the negotiated data compression algorithm identified in the response message, and indicating in the subsequent message that data compression is performed.

6. The method of claim 5 wherein the negotiated data compression algorithm identified in the response message is selected from the at least one data compression algorithm indicated in the association message.

7. A network device for a wireless communication network comprising:
a reception module to receive an association or re-association message identifying a data compression algorithm supported by a terminal device belonging to the wireless communication network;
a processing module to determine that the data compression algorithm identified in the received association or re-association message is a data compression algorithm supported by the network device, and to determine a negotiated data compression algorithm, amongst at least one data compression algorithm supported by the network device, that corresponds to the data compression algorithm identified in the received association or re-association message; and
a transmission module to send a message indicating the at least one data compression algorithm supported by the network device, and to send a response message in response to the received association or re-association message indicating that data compression is supported and identifying the determined negotiated data compression algorithm.

8. The network device of claim 7 wherein the transmission module is configured to send the message indicating the at least one data compression algorithm supported by the network device in response to the reception module receiving a request from the terminal device.

9. The network device of claim 7 wherein the processing module is configured to compress a payload of a subsequent message using the negotiated data compression algorithm identified in the response message and to indicate in the subsequent message that data compression is performed, and the transmission module is configured to send the subsequent message to the terminal device.

10. The network device of claim 7 wherein, in the case where the wireless communication network includes a plurality of terminal devices,
the reception module is configured to receive an association or re-association message from each of the plurality of terminal devices, each association or re-association message identifying a data compression algorithm supported by the respective one of the plurality of terminal devices,
the processing module is configured to determine that the data compression algorithm identified in each of the received association or re-association messages is a data compression algorithm supported by the network device, to determine for each of the plurality of terminal devices a negotiated data compression algorithm amongst the at least one data compression algorithm that corresponds to the data compression algorithm identified in the respective received association or re-association message, to determine that the plurality of terminal devices support the same data compression algorithm based on the association or re-association message received from each of the plurality of terminal devices, and to compress a payload of a subsequent message using the negotiated data compression algorithm and indicate in the subsequent message that data compression is performed,
the transmission module is configured to send a response message to each of the plurality of terminal devices identifying the respective negotiated data compression algorithm, and multicasting or broadcasting to the plurality of terminal devices the subsequent message.

11. A terminal device for a wireless communication network comprising:
a reception module configured to receive a first message indicating at least one data compression algorithm supported by a network device belonging to the wireless communication network and a response message identifying a negotiated data compression algorithm from the network device;
a processing module configured to determine amongst the at least one data compression algorithm indicated in the received first message a data compression algorithm supported by the terminal device, to indicate that data compression is supported and to identify the determined data compression algorithm in a second message, to confirm that the negotiated data compression algorithm identified in the received response message corresponds to the determined data compression algorithm, to compress a payload of a subsequent message using the negotiated data compression algorithm and indicate in the subsequent message that data compression is performed; and
a transmission module configured to send the second message and the subsequent message.

12. The terminal device of claim 11 wherein the transmission module is configured to send a request to the network device for requesting the network device to send the first message indicating the at least one data compression algorithm supported by the network device.

13. The terminal device of claim 11 wherein the transmission module is configured to send an association message indicating at least one data compression algorithm supported by the terminal device to another terminal device belonging to the wireless communication network, the reception module is configured to receive a response message identifying a negotiated data compression algorithm from the another terminal device, and the transmission module is configured to send the subsequent message to the another terminal device.
